# EUROPÄISCHE PATENTSCHRIFT

(11) **EP 1 353 994 B1**
(45) Veröffentlichungstag und Bekanntmachung des Hinweises auf die Patenterteilung: **10.07.2013**
(21) Anmeldenummer: 01991828.3
(22) Anmeldetag: 12.12.2001
(51) Int. Cl.: C08K 9/08, C09C 3/10

(54) **MODIFIZIERTE ANORGANISCHE PARTIKEL**
MODIFIED INORGANIC PARTICLES
PARTICULES INORGANIQUES MODIFIEES

(30) Priorität: 15.12.2000 AT 20872000
(43) Veröffentlichungstag der Anmeldung: 22.10.2003
(73) Patentinhaber: Borealis Agrolinz Melamine GmbH, 4020 Linz (AT)
(72) Erfinder: RÄTZSCH, Manfred, A-4062 Wilhering/Thalheim (AT); DICKE, René, A-4020 Linz (AT); MACHHERNDL, Markus, A-4060 Leonding (AT); GRANNER, Gerd, A-4061 Pasching (AT)
(74) Vertreter: Gross, Felix
(86) Internationale Anmeldenummer: PCT/EP2001/014583
(87) Internationale Veröffentlichungsnummer: WO 2002/048248

(56) Entgegenhaltungen:
- WO-A-00/44669
- DATABASE WPI Section Ch, Week 199250 Derwent Publications Ltd., London, GB; Class A60, AN 1992-409808 XP002199333 & JP 04 305005 A (NIPPON PAINT CO LTD), 28. Oktober 1992 (1992-10-28)
- DATABASE WPI Section Ch, Week 197717 Derwent Publications Ltd., London, GB; Class A12, AN 1977-29855Y XP002199334 & JP 52 033931 A (SHIRAISHI CHUO KENKYUSHO KK), 15. März 1977 (1977-03-15)

## Beschreibung

Die Erfindung betrifft modifizierte anorganische Partikel mit Schichtstruktur sowie ein Verfahren zu deren Herstellung und deren Verwendung.

Anorganische Partikel mit Schichtstruktur wie Tonmineralien sowie deren Modifizierung mit Farbstoffen, mehrwertigen Alkoholen und Alkylammoniumionen sind bekannt [Lagaly, G., Clay minerals (1981)16, 1-21]. Weiterhin ist bekannt, anorganische Partikel mit Schichtstruktur als Kunststoffadditive in Elastomeren (EP 0 484 245) und Thermoplasten [Mülhaupt, R., Kunststoffe 87(1997)4, 482-486] einzusetzen. Von Nachteil ist die hohe Agglomeration der schichtförmigen Tonmineralien, so dass es nicht gelingt, schichtförmige Tonmineralien feinteilig in Thermoplastschmelzen zu verteilen.

Bekannte Lösungen für die Dispergierung von schichtförmigen Tonmineralien mit Partikelgrössen von 1 bis 500 nm in Kunststoffschmelzen sind der Zusatz von Aminsubstituierten Oniumkomplexen (WO 93 04 117) oder die Dispergierung von Phyllosilikaten durch Entwässerung und Komplexierung mit Lösungen wasser-unlöslicher Polymerer (EP 0 822 163). Diese Verfahren sind jedoch sehr aufwendig, niedermolekulare Verbindungen in den Blends bewirken einen Abfall der Festigkeit der Blends.

Aufgabe der vorliegenden Erfindung sind anorganische Partikel mit Schichtstruktur, die eine gute Dispergierbarkeit in Kunststoffen besitzen und eine Verbesserung des Eigenschaftsspektrums von thermoplastischen und duroplastischen Kunststoffen, insbesondere von Polyolefinen, bewirken.

Die erfindungsgemässe Aufgabe wurde durch modifizierte anorganische Partikel mit Schichtstruktur gelöst, wobei die modifizierten anorganischen Partikel einen mittleren Partikeldurchmesser von 5 nm bis 20000 nm und eine äussere Hülle aus 0,1 bis 20 Masse%, bezogen auf das wasserfreie anorganische Partikel, Aminoplasten besitzen und interlamellar 20 bis 5000 Masse%, bezogen auf das wasserfreie anorganische Partikel, eines Gemischs aus 50 bis 98 Masse% von im wesentlichen mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze und 2 bis 50 Masse% Wasser enthalten.

Anorganische Partikel mit Schichtstruktur sind beispielsweise Silikate, Phosphate, Arsenate, Titanate, Vanadate, Niobate, Molybdate und/oder Manganate, insbesondere Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Halloysit, Kenyait, Sauconit, Borfluorphlogopite und/oder synthetische Schichtsilikate, wobei die Schichtsilikate weiterhin besonders bevorzugt Schichtsilikate mit austauschbaren Kationen von Typ Alkali-, Erdalkali-, Aluminium-, Eisen- und/oder Mangan-Kationen, sind.

Beispiele für geeignete Phosphate mit Schichtstruktur sind Verbindungen der Formel H₂[M^{IV}(PO₄)₂].ₓH₂O (M^{IV}=Zr, Ti, Ge, SN, Pb) und CaPO₄R·H₂O (R=CH₃; C₂H₅).

Beispiele für geeignete Arsenate mit Schichtstruktur sind Verbindungen der Formel H₂[M^{IV}(AsO₄)₂] . ₓH₂O und H[Mn(AsO₄)₂] . ₓH₂O, Beispiele für geeignete Titanate mit Schichtstruktur sind Verbindungen der Formel Na₄Ti₉O₂₀. xH₂O und K₂Ln₂Ti₃O_{10 x}H₂O.

Synthetische Schichtsilikate werden beispielsweise durch Umsetzung von natürlichen Schichtsilikaten mit Natriumhexafluorosilikat erzielt.

Insbesondere werden solche Schichtsilikate bevorzugt, deren Schichten einen Schichtabstand von rd. 0,4 nm bis 1,5 nm besitzen.

Die Aminoplaste der äusseren Hülle der erfindungsgemässen modifizierten anorganischen Partikel mit Schichtstruktur sind bevorzugt Melaminharze, Harnstoffharze, Cyanamidharze, Dicyandiamidharze, Sulfonamidharze, Guanaminharze und/oder Anilinharze.

Bevorzugt werden als Melaminharze Polykondensate aus Melamin bzw. Melaminderivaten und C₁-C₁₀-Aldehyden mit einem Molverhältnis Melamin bzw. Melaminderivat / C₁-C₁₀-Aldehyden 1 : 1 bis 1: 6 sowie deren partielle Veretherungsprodukte mit C₁-C₁₀-Alkoholen, wobei die Melaminderivate bevorzugt durch Hydroxy-C₁-C₁₀-alkyl-gruppen, Hydroxy-C₁-C₄-alkyl(oxa-C₂-C₄-alkyl)₁₋₅-grup-pen und/oder durch Amino-C₁-C₁₂-alkylgruppen substituierte Melamine, Diaminomethyltriazine und/oder Diaminophenyltriazine, besonders bevorzugt 2-(2-Hydro-xyethylamino)-4,6-diamino-1,3,5-triazin, 2-(5-Hydroxy-3-oxa-pentylamino)-4,6-di-ami-no-1,3,5-triazin und/oder 2,4,6-Tris-(6-aminohexylamino)-1,3,5-triazin, Ammelin, Am-melid, Melern, Melon, Melam, Benzoguanamin, Acetoguanamin, Tetrameth-oxymethylbenzoguanamin, Caprinoguanamin und/oder Butyroguanamin sind, und die C₁-C₁₀-Aldehyde bevorzugt Formaldehyd, Acetaldehyd, Trimethylolacetaldehyd, Acrolein, Furfurol, Glyoxal und/oder Glutaraldehyd, besonders bevorzugt Formaldehyd, sind.

Die Melaminharze in der äusseren Hülle der erfindungsgemässen modifizierten anorganischen Partikel mit Schichtstruktur können ebenfalls 0,1 bis 10 Masse%, bezogen auf die Summe von Melamin und Melaminderivaten, eingebaute Phenole und/oder Harnstoff enthalten. Als Phenolkomponenten sind dabei Phenol, C₁-C₉-Alkylphenole, Hydroxyphenole und/oder Bisphenole geeignet.

Beispiele für partielle Veretherungsprodukte von Melaminharzen mit C₁-C₁₀-Alko-holen sind methylierte oder butylierte Melaminharze.

Beispiele für die in der äusseren Hülle der erfindungsgemässen modifizierten anorganischen Partikel mit Schichtstruktur als Aminoplaste gegebenenfalls enthaltenen Harnstoffharze sind neben Harnstoff-Formaldehyd-Harzen ebenfalls Mischkondensate mit Phenolen, Säureamiden oder Sulfonsäureamiden.

Beispiele für die in der äusseren Hülle der erfindungsgemässen modifizierten anorganischen Partikel mit Schichtstruktur als Aminoplaste gegebenenfalls enthaltenen Sulfonamidharze sind Sulfonamidharze aus p-Toluolsulfonamid und Formaldehyd.

Beispiele für die in der äusseren Hülle der erfindungsgemässen modifizierten anorganischen Partikel mit Schichtstruktur als Aminoplaste gegebenenfalls enthaltenen Guanaminharze sind Harze, die als Guanaminkomponente Benzoguanamin, Acetoguanamin, Tetramethoxymethylbenzoguanamin, Caprinoguanamin und/oder Butyroguanamin enthalten.

Beispiele für die in der äusseren Hülle der erfindungsgemässen modifizierten anorganischen Partikel mit Schichtstruktur als Aminoplaste gegebenenfalls enthaltenen Anilinharze sind Anilinharze, die als aromatische Diamine neben Anilin ebenfalls Toluidin und/oder Xylidine enthalten können.

Die interlamellar in den erfindungsgemässen modifizierten anorganischen Partikeln mit Schichtstruktur gegebenenfalls enthaltenen Melaminderivate sind bevorzugt durch Hydroxy-C₁-C₁₀-alkylgruppen, Hydroxy-C₁-C₄-alkyl-(oxa-C₂-C₄-alkyl)₁₋₅-grup-pen und/oder durch Amino-C₁-C₁₂-alkylgruppen substituierte Melamine, Diaminomethyltriazine und/oder Diaminophenyltriazine, bevorzugt 2-(2-Hydroxyethylamino)-4,6-diamino-1,3,5-triazin, 2-(5-Hydroxy-3-oxapentylamino)-4,6-diamino-1,3,5-triazin, 2,4,6-Tris-(6-aminohexylamino)-1,3,5-triazin und/oder 2,4-(Di-5-hydroxy-3-oxapen-tylamin)-6-methyl-1,3,5-triazin, Ammelin, Ammelid, Melem, Melon und/oder Melam.

Die interlamellar in den erfindungsgemässen modifizierten anorganischen Partikeln mit Schichtstruktur gegebenenfalls enthaltenen Harnstoffderivate sind Thioharnstoff sowie durch C₁-C₁₀-alkylgruppen, C₆-C₁₄-arylgruppen, Hydroxy-C₁-C₁₀-alkylgruppen , Hydroxy-C₁-C₄-alkyl-(oxa-C₂-C₄-alkyl)₁₋₅-gruppen und/oder durch Amino-C₁-C₁₂-alkylgruppen substituierter Harnstoff bzw. Thioharnstoff.

Die interlamellar in den erfindungsgemässen modifizierten anorganischen Partikeln mit Schichtstruktur gegebenenfalls enthaltenen Salze von Melamin, Melaminderivaten, Harnstoff, Harnstoffderivaten, Guanidin, Guanidinderivaten, Cyanamid, Dicyandiamid, Sulfonamiden und/oder Anilin sind bevorzugt Salze mit anorganischen und/oder organischen Anionen, insbesondere Fluoride, Chloride, Bromide, Jodide, Sulfate, Phosphate, Borate, Silikate, Cyanurate, Tosylate, Formiate, Acetate, Propionate, Butyrate und/oder Maleinate.

Die modifizierten anorganischen Partikel mit Schichtstruktur werden erfindungsgemäss nach einem Verfahren hergestellt, bei dem in einem Rührreaktor Suspensionen von anorganischen Partikeln mit Schichtstruktur in Wasser bzw. Mischungen aus 5 bis 99 Gew.% Wasser und 95 bis 1 Masse% C₁-C₈-Alkoholen mit einem Feststoffgehalt von 2 bis 35 Masse% bei 20 bis 100°C und einer Verweilzeit von 10 bis 180 min mit Lösungen oder Suspensionen von mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert werden, wobei der Masseanteil der mehrfunktionellen C₁-C₃₀ Aminoverbindungen, bezogen auf das wasserfreie anorganische Partikel, 20 bis 5000 Masse% beträgt, nachfolgend zu der Dispersion der beladenen anorganischen Partikel, gegebenenfalls nach partieller Abtrennurig der flüssigen Phase, Aminoplastprepolymere vom Typ Melaminharze, Harnstoffharze, Cyanamidharze, Dicyan-diamidharze, Sulfonamidharze, Guanaminharze und/oder Anilinharze mit einem Molmassenzahlenmittel von 150 bis 1000 als Lösung in Wasser und/oder in organischen Lösungsmitteln oder Lösungsmittelgemischen mit einem Harzanteil von 30 bis 98 Masse% sowie gegebenenfalls 0,1 bis 2,0 Masse%, bezogen auf die Aminoplastprepolymere, saure Katalysatoren, bei 20 bis 90°C eingetragen und umgesetzt werden, wobei der Aminoplastanteil in der Dispersion, bezogen auf das wasserfreie anorganische Partikel, 0,1 bis 20 Masse%, der Feststoffgehalt der Dispersion an anorganischen Partikeln 0,5 bis 35 Masse% und die Verweilzeit 10 bis 45 min beträgt, und nachfolgend die modifizierten anorganischen Partikel unter Abtrennung der flüssigen Phase bei 20 bis 180°C und einer Verweilzeit von 0,1 bis 8 Std. getrocknet werden.

Ein weiteres Verfahren zur Herstellung modifizierter anorganischer Partikel mit Schichtstruktur besteht darin, dass erfindungsgemäss in einem Rührreaktor Suspensionen von anorganischen Partikeln mit Schichtstruktur in Wasser bzw. Mischungen aus 5 bis 99 Gew.% Wasser und 95 bis 1 Masse% C₁-C₈-Alkoholen mit einem Feststoffgehalt von 2 bis 35 Masse% bei 20 bis 100°C und einer Verweilzeit von 10 bis 180 min mit Lösungen oder Suspensionen von mehrfunktionellen C₁-C₃₀ Aminoverbindungen vom Typ Melamin, Melaminderivate, Harnstoff, Harnstoffderivate, Cyanamid, Dicyandiamid, Sulfonamide Guanidin, Guanidinderivate und/ oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert werden, wobei der Masseanteil der mehrfunktionellen C₁-C₃₀ Aminoverbindungen, bezogen auf die wasserfreien anorganischen Partikel, 20 bis 5000 Masse% beträgt, nachfolgend zu der Dispersion der beladenen anorganischen Partikel, gegebenenfalls nach partieller Abtrennung der flüssigen Phase, 0,1 bis 10 Masse%, bezogen auf die wasserfreien anorganischen Partikel , C₁-C₁₀-Aldehyde als 5 bis 50% Lösungen in Wasser bzw. Mischungen aus 5 bis 99 Gew.% Wasser und 95 bis 1 Masse% C₁-C₈-Alkoholen, die gegebenenfalls 0,05 bis 1,0 Masse%, bezogen auf die C₁-C₁₀-Aldehyde, saure Katalysatoren enthalten, innerhalb 10 bis 90 min bei 50 bis 90°C zugesetzt werden, und nachfolgend die modifizierten anorganischen Partikel unter Abtrennung der flüssigen Phase bei 20 bis 180°C und einer Verweilzeit von 0,1 bis 8 Std. getrocknet werden.

Die bei der Herstellung der modifizierten anorganischen Partikel eingesetzten C₁-C₁₀-Aldehyde sind bevorzugt Formaldehyd, Acetaldehyd, Trimethylolacetaldehyd, Acrolein, Benzaldehyd, Furfurol, Glyoxal, Glutaraldehyd, Phthalaldehyd und/oder Terephthalaldehyd, besonders bevorzugt Formaldehyd.

Beispiele für geeignete saure Katalysatoren bei den erfindungsgemässen Verfahren zur Herstellung modifizierter anorganischer Partikel mit Schichtstruktur sind anorganische Säuren wie Salzsäure oder Schwefelsäure und/oder organische Säuren wie Ameisensäure, Essigsäure, Oxalsäure, p-Toluolsulfonsäure oder Milchsäure. Bevorzugt werden Säuren mit Pufferfunktion wie Citronensäure, Essigsäure und/oder Phosphorsäure oder saure Salze mit Pufferfunktion wie Natriumhydrogenphosphat oder Kaliumhydrogenphosphat.

Die modifizierten anorganischen Partikel sind insbesondere zur Flammfestmachung von Kunststoffen, bevorzugt in Kombination mit anorganischen und/oder organischen Salzen mit Ammonium-, Alkylammonium-, Arylammonium, Phosphonium-, Alkylphosphonium-, Arylphosphonium- Alkali- und/oder Erdalkali-Kationen und/oder Phosphat-, Phosphit-, Phosphonat-, Silikat- und/oder Borat-Anionen und/oder mit mehrwertigen Alkoholen vom Typ Erythrit, Pentaerythrit, Pentit und/oder Hexit , sowie als Additiv zur Erhöhung der Kratzfestigkeit, UV-Beständigkeit und Verbesserung der Barriereeigenschaften von Kunststoffen und Kunststofflaminaten, sowie als Katalysator bzw. Katalysatorträger, geeignet.

In der Anwendung der modifizierten anorganischen Partikel als Kunststoffadditiv ist es von Vorteil, den modifizierten anorganischen Partikel 0,1 bis 5 Masse%, bezogen auf die modifizierten anorganischen Partikel, wasserlösliche, in Wasser dispergierbare und/oder in Wasser emulgierbare Polymere, bevorzugt Polyvinylalkohol, Polyvinylacetat, Maleinsäureanhydrid-Copolymere und/oder gesättigte bzw. unge-sättigte Polyester, zuzusetzen.

In der Anwendung der modifizierten anorganischen Partikel als Additiv zur Flammfestmachung von Kunststoffen werden insbesondere Kombinationen bevor-zugt, die Ammoniumpolyphosphat und Pentaerythrit enthalten.

Erfindungsgemäss sind weiterhin Polyolefine mit einem Gehalt von 1 bis 60 Masse%, bezogen auf die eingesetzten Polyolefine, modifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertige Alkoholen,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 25 Masse% im Polyolefin enthalten sein können,
wobei die Füllstoffe und/oder Verstärkerstoffe anorganische bzw. organische Füllstoffe und/oder Fasern sind, die bis zu 40 Masse% im Polyolefin enthalten sein können,
wobei die polymeren Dispergatoren wasserlösliche, in Wasser dispergierbare und/oder in Wasser emulgierbare Polymere sind, die bis zu 3 Masse% im Polyolefin enthalten sein können,
und wobei die mehrwertigen Alkohole mehrwertige Alkohole vom Typ Erythrit, Pentaerythrit, Pentit und/oder Hexit sind, die bis zu 15 Masse% im Polyolefin enthalten sein können.

Bevorzugt beträgt der Anteil der modifizierten anorganischen Partikel mit Schichtstruktur 3 bis 30 Masse%, bezogen auf die Polyolefine.

Die erfindungsgemässen Polyolefine enthaltend modifizierte anorganische Partikel mit Schichtstruktur sowie gegebenenfalls weitere Zusatzstoffe besitzen ein verbessertes Eigenschaftsspektrum in Bezug auf Flammfestigkeit, Zähigkeit, Kratzfestigkeit, UV-Beständigkeit und Barriereeigenschaften.

Bevorzugt sind die erfindungsgemässen Polyolefine enthaltend modifizierte anorganische Partikel mit Schichtstruktur sowie gegebenenfalls weitere Zusatzstoffe Poly-C₂-C₅-α-Olefine bzw. Copolymere aus C₂-C₅-α-Olefinen und α-Olefinen mit 2 bis 18 C-Atomen vom Typ lineare und/oder verzweigte Polyethylen - Homo- und/oder -Copolymere, Cycloolefin-Ethylen-Copolymere, Polypropylen-Homopolymere, statistische Propylen-Copolymere, Propylen - Blockcopolymere, statistische Propylen-Blockcopolymere, isotaktisches Polybuten-1 und/oder 4-Methylpenten-1- Homo- und/oder -Copolymere.

Als Füllstoffe können in den erfindungsgemässen Polyolefinen enthaltend modifizierte anorganische Partikel mit Schichtstruktur sowie gegebenenfalls weitere Zusatzstoffe Al₂O₃, Al(OH)₃, Bariumsulfat, Calciumcarbonat, Glaskugeln, Kieselerde, Glimmer, Quarzmehl, Schiefermehl, Mikrohohlkugeln, Ruß, Talkum, Gesteinsmehl, Holzmehl, und/oder Cellulosepulver enthalten sein.

Beispiele für Verstärkerstoffe in den erfindungsgemässen Polyolefinen enthaltend modifizierte anorganische Partikel mit Schichtstruktur sowie gegebenenfalls weitere Zusatzstoffe sind Holzfasern, Cellulosefasern, Flachs, Jute und Kenaf.

Bevorzugte Verstärkerstoffe, die in den erfindungsgemässen Polyolefinen mit einem Gehalt an modifizierten anorganischen Partikeln mit Schichtstruktur sowie gegebenenfalls weiteren Zusatzstoffen enthalten sein können, sind anorganische Fasern, insbesondere Glasfasern und/oder Kohlenstofffasern, Naturfasern, insbesondere Cellulosefasern, und/oder Kunststofffasern, insbesondere Fasern aus Polyacrylnitril, Polyvinylalkohol, Polyvinylacetat, Polypropylen, Polyestern und/oder Polyamiden.

In den erfindungsgemässen Polyolefinen enthaltend modifizierte anorganische Partikel mit Schichtstruktur sowie gegebenenfalls weitere Zusatzstoffe können als polymere Dispergatoren wasserlösliche, in Wasser dispergierbare und/oder in Wasser emulgierbare Polymere enthalten sein.

Beispiele für wasserlösliche Polymere, die in den erfindungsgemässen Polyolefinen mit einem Gehalt an modifizierten anorganischen Partikeln mit Schichtstruktur sowie gegebenenfalls weiteren Zusatzstoffen enthalten sein können, sind Polyvinylalkohol, Polyacrylamid, Polyvinylpyrrolidon, Polyethylenoxid, Methylcellulose, Ethylcellulose, Hydroxyethylcellulose und/oder Carboxymethylcellulose.

Die in den erfindungsgemässen Polyolefinen enthaltend modifizierte anorganische Partikel mit Schichtstruktur sowie gegebenenfalls weitere Zusatzstoffe gegebenenfalls enthaltenen Wasser dispergierbaren bzw. in Wasser emulgierbaren Polymere sind Thermoplaste, Elastomere und/oder Wachse.

Beispiele für geeignete Thermoplaste sind Celluloseester, Celluloseether, Polyvinylacetat, Polyvinylpropionat, Polyacrylate, ungesättigte bzw. gesättigte Polyester, Maleinsäureanhydrid-Copolymere, Polypropylenoxid und/oder Ethylen-VinylacetatCopolymere. Als Maleinsäureanhydrid-Copolymere werden Copolymere bevorzugt, bei denen die Anhydridgruppen durch Amidierung und/oder Imidierung mit hydrophoben Kohlenwasserstoffsubstituenten oder durch Veresterung mit hydrophilen Polyalkylenoxidsubstituenten modifiziert sind.

Beispiele für in Wasser dispergierbare bzw. in Wasser emulgierbare Elaste sind Styren-Butadien-Kautschuke, Acrylatkautschuke, Polyurethane und/oder Fluorelastomere.

Beispiele für geeignete Wachse sind Polyolefinoxidatwachse wie Polyethylenwachsoxidate oder Wachse auf Basis von Ethylen-Vinylacetat-Copolymeren.

Besonders bevorzugte polymere Dispergatoren, die in den erfindungsgemässen Polyolefinen mit einem Gehalt an modifizierten anorganischen Partikeln mit Schichtstruktur sowie gegebenenfalls weiteren Zusatzstoffen gegebenenfalls enthalten sind, sind Polyvinylalkohol, Polyvinylacetat, Maleinsäureanhydrid-Copolymere und/oder ungesättigte bzw. gesättigte Polyester.

Die erfindungsgemässen Polyolefine enthaltend modifizierte anorganische Partikel mit Schichtstruktur sowie gegebenenfalls weitere Zusatzstoffe können nach einem Verfahren hergestellt werden, bei dem Mischungen aus Polyolefinen, modifizierten anorganischen Partikeln und gegebenenfalls als weitere Zusatzstoffe anorganischen bzw. organischen Salzen, Füllstoffen, Verstärkerstoffen, polymeren Dispergatoren in Form von Lösungen, Dispersionen oder Emulsionen, Hilfsstoffen und/oder mehrwertigen Alkoholen in kontinuierlichen Knetern aufgeschmolzen oder bei dem Polyolefine in kontinuierlichen Knetern aufgeschmolzen werden und die Dosierung der modifizierten anorganischen Partikel und gegebenenfalls anorganischen bzw. organischen Salzen, Füllstoffen, Verstärkerstoffen, polymeren Dispergatoren in Form von Lösungen, Dispersionen oder Emulsionen und/oder mehrwertigen Alkoholen in die Polymerschmelze erfolgt, die Mischungen bei Massetemperaturen 30 bis 100 grd oberhalb der Schmelz- bzw. Erweichungstemperatur der Polyolefine homogenisiert, gegebenenfalls vacuumentgast, ausgetragen und granuliert werden, oder direkt aus der Schmelze zu Halbzeugen oder Formstoffen ausgeformt werden, wobei der Gehalt der Polyolefine an modifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertigen Alkoholen 1 bis 60 Masse%, bezogen auf die eingesetzten Polyolefine, beträgt.

Als kontinuierliche Kneter werden bei der Herstellung der erfindungsgemässen Polyolefine enthaltend modifizierte anorganische Partikel mit Schichtstruktur sowie gegebenenfalls weitere Zusatzstoffe bevorzugt Doppelschneckenextruder mit UD 30 bis 48 oder Einschneckenextruder mit Plungerschnecke eingesetzt.

Bei der Herstellung können weiters als Hilfsstoffe 0,01 bis 2,5 Masse% Stabilisatoren, 0,1 bis 1 Masse% Antistatika und/oder 0,01 bis 5 Masse% Verarbeitungshilfsmittel, jeweils bezogen auf die eingesetzten Polyolefine, zugesetzt werden.

Geeignete Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Als Verarbeitungshilfsmittel können bei der Herstellung der erfindungsgemässen Polyolefine enthaltend modifizierte anorganische Partikel mit Schichtstruktur sowie gegebenenfalls weitere Zusatzstoffe Calciumstearat, Magnesiumstearat und/oder Wachse zugesetzt werden.

Bevorzugt enthalten die bei der Herstellung der erfindungsgemässen Polyolefine enthaltend modifizierte anorganische Partikel mit Schichtstruktur sowie gegebenenfalls weitere Zusatzstoffe eingesetzten Polyolefine bzw. Olefincopolymere 0,05 bis 2 Masse%, bezogen auf die eingesetzten Polyolefine, Säure-, Säureanhydrid- und/oder EpoxidGruppen enthaltende Olefincopolymere und/oder Olefinpfropfcopolymere, bevorzugt Ethylen-Butylacrylat-Acrylsäure-Terpolymere mit einem Acrylsäuregehalt von 0,1 bis 2 Masse% oder Maleinsäureanhydrid-gepfropftes Polypropylen mit einem Maleinsäureanhydridgehalt von 0,05 bis 0,5 Masse%, als Kompatibilisator für die modifizierten anorganischen Partikel mit Schichtstruktur und die anorganischen bzw. organischen Salze und/oder mehrwertigen Alkohole. Die Olefinpfopfcopolymere können nach üblichen Verfahren durch Umsetzung des Polyolefins mit dem ungesättigten Monomer in Gegenwart thermisch zerfallender Radikalbildner in fester Phase oder in der Schmelze hergestellt werden.

Die erfindungsgemässen Polyolefine enthaltend modifizierte anorganische Partikel mit Schichtstruktur sowie gegebenenfalls weitere Zusatzstoffe weisen ein verbessertes Eigenschaftsspektrum, insbesonders eine gute Flammfestigkeit auf. Sie werden insbesondere als Folien, Fasern, Platten, Rohre, Beschichtungen, Hohlkörper, Spritzgusserzeugnisse und Schaumstoffe angewendet. Der besondere Vorteil dieser Halbzeuge und Formstoffe besteht in der verbesserten Flammfestigkeit, Zähigkeit, Kratzfestigkeit, UV-Beständigkeit und den verbesserten Barriereeigenschaften.

Erfindungsgemäss sind weiterhin duroplastische Kunststoffe mit einem Gehalt von 2 bis 80 Masse%, bezogen auf die eingesetzten duroplastischen Kunststoffe, modifizierten anorganischen Partikeln mit Schichtstruktur sowie gegebenenfalls als weitere Zusatzstoffe anorganischen bzw. organischen Salzen, Füllstoffen, Verstärkerstoffen, polymere Dispergatoren, Hilfsstoffen und/oder mehrwertige Alkoholen,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 60 Masse% in den duroplastischen Kunststoffen enthalten sein können,
wobei die Füllstoffe und/oder Verstärkerstoffe anorganische bzw. organische Füllstoffe und/ oder Fasern sind, die bis zu 70 Masse% in den duroplastischen Kunststoffen enthalten sein können,
wobei die polymeren Dispergatoren wasserlösliche, in Wasser dispergierbare und/oder in Wasser emulgierbare Polymere sind, die bis zu 5 Masse% in den duroplastischen Kunststoffen enthalten sein können,
und wobei die mehrwertigen Alkohole mehrwertige Alkohole vom Typ Erythrit, Pentaerythrit, Pentit und/oder Hexit sind, die bis zu 30 Masse% in den duroplastischen Kunststoffen enthalten sein können.

Bevorzugt enthalten die duroplastischen Kunststoffe 5 bis 50 Masse% modifizierte anorganische Partikel, bezogen auf die duroplastischen Kunststoffe.

Beispiele für duroplastische Kunststoffe sind Melaminharze, Harnstoffharze, Guanaminharze, Cyanamidharze, Dicyandiamidharze, Sulfonamidharze oder Anilinharze.

Die duroplastischen Kunststoffe können aus Aminoplasten der gleichen Zusammensetzung bestehen, die Bestandteil der äusseren Hülle der modifizierten anorganischen Partikel sein kann.

Die in den duroplastischen Kunststoffen enthaltend modifizierte anorganische Partikel mit Schichtstruktur gegebenenfalls enthaltenen weiteren Zusatzstoffe können Zusatzstoffe sein, die ebenfalls in den Polyolefinen enthaltend modifizierte anorganische Partikel mit Schichtstruktur sowie gegebenenfalls weitere Zusatzstoffe enthalten sein können.

Die erfindungsgemässen duroplastischen Kunststoffe enthaltend modifizierte anorganische Partikel mit Schichtstruktur sowie gegebenenfalls weitere Zusatzstoffe werden nach einem Verfahren hergestellt, bei dem Mischungen aus Duroplast-Vorkondensaten, modifizierten anorganischen Partikeln mit Schichtstruktur und gegebenenfalls als weitere Zusatzstoffe anorganischen bzw. organischen Salzen, Füllstoffen, Verstärkerstoffen, polymeren Dispergatoren in Form von Lösungen, Dispersionen oder Emulsionen, Hilfsstoffen und/oder mehrwertigen Alkoholen nach üblichen Verfahren zu Halbzeugen oder Formstoffen ausgeformt und gehärtet werden, wobei der Gehalt der Blends an modifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertigen Alkoholen 1 bis 80 Masse%, bezogen auf die eingesetzten duroplastischen Kunststoffe, beträgt,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Polyphosphate, Phosphonat-, Silikat- und/oder Borat-Anionen sind, die bis zu 45 Masse% im duroplastischen Kunststoff enthalten sein können,
wobei die Füllstoffe und/oder Verstärkerstoffe anorganische bzw. organische Füllstoffe und/ oder Fasern sind, die bis zu 60 Masse% im duroplastischen Kunststoff enthalten sein können,
wobei die polymeren Dispergatoren wasserlösliche, in Wasser dispergierbare und/oder in Wasser emulgierbare Polymere sind, die bis zu 5 Masse% im duroplastischen Kunststoff enthalten sein können,
und wobei die mehrwertigen Alkohole mehrwertige Alkohole vom Typ Erythrit, Pentaerythrit, Pentit und/oder Hexit sind, die bis zu 15 Masse% im duroplastischen Kunststoff enthalten sein können.

Eine bevorzugte Variante zur Herstellung der erfindungsgemässen duroplastischen Kunststoffe enthaltend modifizierte anorganische Partikel mit Schichtstruktur sowie gegebenenfalls weitere Zusatzstoffe besteht darin, dass die Duroplast-Vorkondensate durch Polykondensation der den Duroplast-Vorkondensaten zugrundeliegenden Monomeren in Gegenwart der modifizierten anorganischen Partikel mit Schichtstruktur und gegebenenfalls als weitere Zusatzstoffe anorganischen bzw. organischen Salzen, Füllstoffen, Verstärkerstoffen, Hilfsstoffen polymeren Dispergatoren und/oder mehrwertigen Alkoholen hergestellt werden.

Die in den erfindungsgemässen duroplastischen Kunststoffen enthaltend modifizierte anorganische Partikel mit Schichtstruktur sowie gegebenenfalls weitere Zusatzstoffe gegebenenfalls enthaltenen wasserlöslichen, in Wasser dispergierbaren und/oder in Wasser emulgierbaren Polymere als polymere Dispergatoren können bei der Herstellung der duroplastischen Kunststoffe ebenfalls in situ gebildet werden, indem zu den als wässrige Dispersionen bzw. Emulsionen vorliegenden Mischungen aus Aminoplast-Vorkondensaten und modifizierten anorganischen Partikeln mit Schichtstruktur vor der Herstellung der duroplastischen Kunststoffe anstelle von polymeren Dispergatoren Mischungen aus ethylenisch ungesättigten Monomeren und thermisch zerfallenden Radikalbildnern zugesetzt werden, aus denen die wasserlöslichen, in Wasser dispergierbaren und/oder in Wasser emulgierbaren Polymere gebildet werden. Beispiele für geeignete ethylenisch ungesättigte Monomere sind Acrylamid, Vinylpyrrolidon, C₄-C₁₈-(Meth)acrylsäureester und/oder Vinylacetat.

Bevorzugte Halbzeuge und Formstoffe aus Polyolefinen bzw. duroplastischen Kunststoffe enthaltend modifizierte anorganische Partikel mit Schichtstruktur sowie gegebenenfalls weitere Zusatzstoffe sind Folien, Prepregs, Fasern, Platten, Rohre, Beschichtungen, Hohlkörper, Spritzgusserzeugnisse und Schaumstoffe.

Die erfindungsgemässen Halbzeuge und Formstoffe aus Polyolefinen enthaltend modifizierte anorganische Partikel mit Schichtstruktur sowie gegebenenfalls weitere Zusatzstoffe können nach üblichen thermoplastischen Verarbeitungsverfahren hergestellt werden, wobei Poly-C₂-C₅-α-Olefine bzw. Copolymere aus C₂-C₅-α-Olefinen und α-Olefinen mit 2 bis 18 C-Atomen enthaltend modifizierte anorganische Partikel mit Schichtstruktur und gegebenenfalls als weitere Zusatzstoffe anorganische bzw. organische Salze, Füllstoffe, Verstärkerstoffe, polymere Dispergatoren, Hilfsstoffe und/oder mehrwertige Alkohole in kontinuierlichen Knetern, bevorzugt in Extrudern mit UD von 30 bis 48, bei Temperaturen von 30 bis 120°C oberhalb der Schmelz- bzw. Erweichungstemperaturen der Polyolefine aufgeschmolzen, homogenisiert, und
A) über eine Ringdüse ausgetragen, unter Einpressen von Luft als Blasfolie abgezogen und aufgewickelt werden, oder
B) über eine Breitschlitzdüse ausgetragen, auf eine Chill-Roll-Anlage aufgebracht und als Deckelfolie abgezogen und aufgewickelt werden oder bei Chill-Roll-Anlagen mit mehreren Breitschlitzdüsen als Coextrusionsfolie abgezogen und aufgewickelt werden, oder
C) als Schmelze auf ein Mischwalzwerk und nachfolgend auf einen Kalander aufgegeben werden und als Tiefziehfolie abgezogen und aufgewickelt werden oder auf Flächenbahnen aus Metallfolien, Kunststoffolien, Papierbahnen oder Textilbahnen aufgesiegelt und als Mehrkomponentenverbunde abgezogen und aufgewickelt werden, oder
D) als Schmelze auf einen Glättwerk aufgegeben und als Tiefziehfolie abgezogen und aufgewickelt, als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und aufgewickelt werden, oder
E) über eine Profildüse ausgetragen und als Profil abgezogen, geschnitten und konfektioniert werden, oder
F) über eine Ringdüse ausgetragen, unter Einpressen von Luft als Schlauch abgezogen und aufgewickelt oder als Rohr abgezogen, geschnitten und konfektioniert werden, oder
G) nach Eindosierung von Treibmitteln über eine Breitschlitzdüse ausgetragen oder unter Einpressen von Luft über eine Ringdüse ausgetragen und als Schaumfolie abgezogen und aufgewickelt oder über eine Runddüse ausgetragen, als Strang abgezogen und in Partikelschaumsegmente geschnitten werden, oder
H) über eine Breitschlitzdüse einer Rohrbeschichtungsanläge ausgetragen und schmelzflüssig auf das rotierende Rohr aufgesiegelt werden, oder
I) über eine Ringdüse unter vorheriger Einführung der Leiteradern oder der verkabelten Einzelkabel ausgetragen und als Einzelkabel oder als mit einem Kabelmantel versehenen verkabelten Einzelkabeln abgezogen und aufgewickelt werden, oder
K) durch Ringdüsen als schlauchförmiger Vorformling extrudiert, durch Ausblasen in einem temperierten geteilten Blaswerkzeug zum Hohlkörper umgeformt und gegebenenfalls in einem zweiten Blaswerkzeug einer zusätzlichen Längsverstreckung durch einen Streckstempel und einer weiteren radialen Verstreckung durch Blasluft unterzogen werden, oder
L) in ein temperiertes Spritzgiesswerkzeug zur Herstellung des Vorformlings eingespritzt und nach Entnahme, gegebenenfalls bevorzugt separater Temperierung des Vorformlings in einem Konditionierungswerkzeug in das Blaswerkzeug überführt und durch Ausblasen zum Hohlkörper umgeformt werden, oder
M) in Spritzgussmaschinen, bevorzugt mit Dreizonenschnecken einer Schneckenlänge von 18 bis 24 D, hohen Einspritzgeschwindigkeiten und bei Werkzeugtemperaturen von 5 bis 70°C, zu Spritzgussformteilen verarbeitet werden, oder
N) in Schmelzspinnanlagen aus Plastifizierextruder, Schmelzepumpe, Schmelzeverteiler, Kapillarwerkzeug, Blasschacht und Nachfolgeeinrichtungen aufgeschmolzen und mittels Schmelzepumpe durch das Kapillarwerkzeug in den Blasschacht extrudiert und als Fäden abgezogen und in Nachfolgeeinrichtungen weiterverarbeitet werden.

Geeignete Verfahren zur Herstellung von Halbzeugen und Formstoffen aus Mischungen von Duroplast-Vorkondensaten, modifizierten anorganischen Partikeln mit Schichtstruktur und gegebenenfalls weiteren Zusatzstoffen zu Halbzeugen und Formstoffen sind
- Rezepturierung zu Formmassen und thermischen Verarbeitung zu Pressteilen, Spritzgussteilen, Fäden oder Profilen durch Pressen, Spritzguss, Schmelzspinnen oder Extrusion, oder
- Verarbeitung von Lösungen der Duroplast-Vorkondensate, die die modifizierten anorganischen Partikel mit Schichtstruktur dispergiert enthalten, zu Duroplastfasern durch Zentrifugenspinnen, Fadenziehen, Extrudieren oder Fibrillierungsprozesse, gegebenenfalls unter nachfolgender Reckung, und Härtung, oder
- Verarbeitung von Lösungen der Duroplast-Vorkondensate, die die modifizierten anorganischen Partikel mit Schichtstruktur dispergiert enthalten, zu Mikrokapseln durch Eintrag in eine emulgatorfreie wässrige Dispersion von festen oder flüssigen Kapselkernbildnern, Aushärtung und Sprühtrocknung, oder
- Verarbeitung von Lösungen der Duroplast-Vorkondensate, die die modifizierten anorganischen Partikel mit Schichtstruktur dispergiert enthalten, zu geschlossenzelligen Schaumstoffen durch Eintrag in eine emulgatorfreie wässrige Dispersion von flüchtigen Kohlenwasserstoffen, Inertgasen und/oder anorganischen Carbonaten, und Austrag der Hohlpartikel entweder in Formen und Aushärtung zu geschlossenzelligen Schaumstoffen oder durch ein Formwerkzeug und Aushärtung zu geschlossenzelligen geschäumten Profilen, oder
- Verarbeitung von Lösungen der Duroplast-Vorkondensate, die die modifizierten anorganischen Partikel mit Schichtstruktur dispergiert enthalten, zu offenzelligen Schaumstoffen durch Eintrag in eine wässrige Treibmittelemulsion von flüchtigen Kohlenwasserstoffen, Inertgasen und/oder anorganischen Carbonaten, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen, oder
- Herstellung von Lackbeschichtungen durch Rezepturierung von Lösungen der Duroplast-Vorkondensate, die die modifizierten anorganischen Partikel mit Schichtstruktur dispergiert enthalten, zu Lackharzlösungen bzw. Lackharzdispersionen und nachfolgend Auftrag der Lackharzlösungen bzw. Lackharzdispersionen auf flächige Trägermaterialien, Trocknung und Härtung, oder
- Herstellung von Schichtpressstoffen bzw. Laminaten durch Rezepturierung von Lösungen der Duroplast-Vorkondensate, die die modifizierten anorganischen Partikel mit Schichtstruktur dispergiert enthalten, zu Tränkharzlösungen bzw. Tränkharzdispersionen und nachfolgend Tränkung von flächigen Trägermaterialien, Laminierung und Härtung, oder
- Verarbeitung von Duroplast-Vorkondensaten, die die modifizierten anorganischen Partikel mit Schichtstruktur dispergiert enthalten, nach der Giessharztechnologie zu Halbzeugen, Formstoffen oder Beschichtungen.

### Beispiel 1

In einem 20 I - Rührreaktor mit Bodenablassventil wird eine Mischung aus 600 g Melamin, 600 g Natriummontmorillonit (Südchemie AG, Moosburg, BRD) und 12 I Wasser auf 80°C erwärmt und 2 Std. gerührt, wobei der Natriummontmorillonit quillt. Mit 115 g HCl wird der pH-Wert der Suspension auf pH=5,0 eingestellt und nach 1 Std. Rühren bei 80°C werden innerhalb von 30 min 360 ml Formaldehyd (30%) zugesetzt. Nach 2 Std. Rühren bei 80°C werden die modifizierten anorganischen Partikel in einem Zellenfilter abgetrennt, chloridfrei gewaschen und bei 75°C/8 Std. im Vacuum getrocknet. Die Ausbeute an modifiziertem Natriummontmorillonit beträgt 1200 g.

Die Primärteilchen des modifizierten Natriummontmorillonits besitzen einen durch Transmissionselektronenmikroskopie ermittelten mittleren Teilchendurchmesser von 150 nm.

ATR-Untersuchungen der modifizierten anorganischen Partikel ergaben eine Oberflächenbeschichtung der Partikel mit Melamin-Formaldehyd-Harz.

Zur Ermittlung des Gehalts an freiem intercaliertem Melamin in den Silikatzwischenschichten wurden 12 g der modifizierten anorganischen Partikel mit Schichtstruktur 48 Std. mit Wasser extrahiert. Nach Eindampfen des Extrakts und Vacuumtrocknung wurden 5,2 g eines weissen Pulvers erhalten. Die Auflösung in Wasser und Fraktionierung mittels HPLC (Waters HPLC 2690, UV-Detektion bei 220 nm, Säule Develosil RP Aquaeus 5mcm 250*2mm, Elution durch 0,05M NaH₂PO₄ / Acetonitril (Lösungsmittelgradient) ergab folgende Zusammensetzung, bezogen auf die Melamin-Eduktmenge : 68 Masse% Melamin; 32 Masse% Hydroxymethylolmelamin und höhermolekulare Oligomere.

### Beispiel 2

In einem 20 I - Rührreaktor mit Bodenablassventil wird eine Mischung aus 500 g Melamin, 50 g Harnstoff, 50 g Thioharnstoff, 600 g Calciummontmorillonit (Süd-chemie AG, Moosburg, BRD) und 12 I Wasser auf 80°C erwärmt und 2 Std. gerührt, wobei der Calciummontmorillonit quillt. Mit 115 g HCl wird der pH-Wert der Suspension auf ca. pH=5,0 eingestellt und nach 1 Std. Rühren bei 80°C werden innerhalb von 30 min 450 ml einer Mischung aus Formaldehyd (30%) und Glutaraldehyd (50%), Molverhältnis 4 : 1. Nach 2 Std. Rühren bei 80°C werden die modifizierten anorganischen Partikel in einem Zellenfilter abgetrennt, chloridfrei gewaschen und bei 75°C/8 Std. im Vacuum getrocknet. Die Ausbeute an modifiziertem Calciummontmorillonit beträgt 1150 g.

Die Primärteilchen des modifizierten Calciummontmorillonits besitzen einen durch Transmissionselektronenmikroskopie ermittelten mittleren Teilchendurchmesser von 650 nm.

ATR-Untersuchungen der modifizierten anorganischen Partikel ergaben eine Oberflächenbeschichtung der Partikel mit Aminoplast.

Zur Ermittlung des Gehalts an freien intercalierten mehrfunktionellen Aminoverbin-dungen in den Silikatzwischenschichten wurden 12 g der modifizierten anorganischen Partikel mit Schichtstruktur 48 Std. mit Wasser extrahiert. Nach Eindampfen des Extrakts und Vacuumtrocknung wurden 5,0 g eines weissen Pulvers erhalten. Die Auflösung in Wasser und Fraktionierung mittels HPLC (Waters HPLC 2690, UV-Detektion bei 220 nm, Säule Develosil RP Aquaeus 5mcm 250*2mm, Elution durch 0,05M NaH₂PO₄ / Acetonitril (Lösungsmittelgradient) ergab folgende Zusammensetzung, bezogen auf die Eduktmenge an mehrfunktionellen Aminoverbindungen : 60 Masse% Melamin; 6 Masse% Harnstoff; 6 Masse% Thioharnstoff; 28 Masse% methylolierte mehrfunktionelle Aminoverbindungen und höhermolekulare Oligomere.

### Beispiel 3

In einem 10 l - Rührreaktor werden 5 kg 30% wässrige Formalinlösung und 1,74 kg Melamin eingetragen und bei 80°C unter Rühren innerhalb 120 min kondensiert.

In einem zweiten 200 l - Rührreaktor mit Turborührer wird eine Mischung aus 6 kg Melamin, 6 kg Natriummontmorilionit (Südchemie AG, Moosburg, BRD) und 120 l Wasser auf 80°C erwärmt und 2 Std. gerührt, wobei der Natriummontmorillonit quillt. Mit 1,15 kg HCl wird der pH-Wert der Suspension auf pH=5,0 eingestellt und 1 Std. bei 80°C gerührt. Nach Abkühlung auf Raumtemperatur wird zu der gerührten Dispersion die wässrige Lösung des Aminoplast-Vorkondensats innerhalb 30 min bei hoher Mischintensität (40 m/s) zugesetzt. Nach einer Reaktionszeit von 60 min wird die Dispersion ausgetragen, die modifizierten anorganischen Partikel in einem Zellenfilter abgetrennt, chloridfrei gewaschen und bei 75°C/8 Std. im Vacuum getrock-net. Die Ausbeute an modifiziertem Natriummontmorillonit beträgt 13,4 kg.

Die Primärteilchen des modifizierten Natriummontmorillonits besitzen einen durch Transmissionselektronenmikroskopie ermittelten mittleren Teilchendurchmesser von 950 nm.

ATR-Untersuchungen der modifizierten anorganischen Partikel ergaben eine Oberflächenbeschichtung der Partikel mit Melaminharz.

Zur Ermittlung des Gehalts an freiem intercaliertem Melamin in den Silikatzwischenschichten wurden 12 g der modifizierten anorganischen Partikel mit Schichtstruktur 48 Std. mit Wasser extrahiert. Nach Eindampfen des Extrakts und Vacuumtrocknung wurden 5,6 g eines weissen Pulvers erhalten. Die Auflösung in Wasser und Fraktionierung mittels HPLC (Waters HPLC 2690, UV-Detektion bei 220 nm, Säule Develosil RP Aquaeus 5mcm 250*2mm, Elution durch 0,05M NaH₂PO₄ / Acetonitril (Lösungsmittelgradient) ergab folgende Zusammensetzung, bezogen auf die Melamin-Eduktmenge: 71 Masse% Melamin; 29 Masse% Hydroxymethylolmelamin und höhermolekulare Oligomere.

### Beispiel 4

In einem 20 l - Rührreaktor werden 5,4 kg 30% wässrige Formalinlösung, 1,3 kg Wasser und 4,0 kg Melamin eingetragen und bei 80°C unter Rühren innerhalb 120 min kondensiert.

In einem zweiten 200 l - Rührreaktor mit Turborührer wird eine Mischung aus 6 kg Melamin, 6 kg Natriummontmorillonit (Südchemie AG, Moosburg, BRD) und 120 l Wasser auf 80°C erwärmt und 2 Std. gerührt, wobei der Natriummontmorillonit quillt. Mit 1,15 kg HCl wird der pH-Wert der Suspension auf pH=5,0 eingestellt und 1 Std. bei 80°C gerührt. Nach Abkühlung auf Raumtemperatur wird zu der gerührten Dispersion die wässrige Lösung des Aminoplast-Vorkondensats innerhalb 30 min bei hoher Mischintensität (40 m/s) zugesetzt. Nach einer Reaktionszeit von 60 min wird die Dispersion ausgetragen, die modifizierten anorganischen Partikel in einem Zellenfilter abgetrennt, chloridfrei gewaschen und bei 75°C/8 Std. im Vacuum getrocknet.

Die Ausbeute an modifiziertem Natriummontmorillonit beträgt 17,1 kg.

Die Primärteilchen des modifizierten Natriummontmorillonits besitzen einen durch Transmissionselektronenmikroskopie ermittelten mittleren Teilchendurchmesser von 650 nm.

ATR-Untersuchungen der modifizierten anorganischen Partikel ergaben eine Oberflächenbeschichtung der Partikel mit Melaminharz.

Zur Ermittlung des Gehalts an freiem intercaliertem Melamin in den Silikatzwischenschichten wurden 12 g der modifizierten anorganischen Partikel mit Schichtstruktur 48 Std. mit Wasser extrahiert. Nach Eindampfen des Extrakts und Vacuumtrocknung wurden 5,6 g eines weissen Pulvers erhalten. Die Auflösung in Wasser und Fraktionierung mittels HPLC (Waters HPLC 2690, UV-Detektion bei 220 nm, Säule Develosil RP Aquaeus 5mcm 250*2mm, Elution durch 0,05M NaH₂PO₄ / Acetonitril (Lösungsmittelgradient) ergab folgende Zusammensetzung, bezogen auf die Melamin-Eduktmenge : 69 Masse% Melamin; 31 Masse% Hydroxymethylolmelamin und höhermolekulare Oligomere.

### Beispiel 5

In einen Leistritz-Extruder ZSK 27, L/D=44 mit Seitenstromdosierung für pulverförmige Medien und einer Dekompressionszone für Vacuumentgasung, Temperaturprofil 20/200/200/200/200/200/200/200/200/200°C, wird eine Mischung eines Propylen-Copolymers (Schmelzindex 16,0 g/10 min bei 230°C/2,16 kg, Ethylengehalt 4,8 Masse%) mit 20 Masse% Ammoniumpolyphosphat, 5 Masse% Pentaerythrit, 0,15 Masse% 2-tert.Butyl-4,6-diisopropylphenol, 0,10 Masse% Bis-2,2,6,6-tetrame-thyl-4-piperidylsebazat, und 0,3 Masse%, jeweils bezogen auf das Propylen-Copolymer, an Calciumstearat mit 14,25 kg/h dosiert, aufgeschmolzen und homogenisiert. Nachfolgend wird in die Polyolefinschmelze über eine Dosiereinrichtung für pulverförmige Medien in die Zone 4 mit 0,75 kg/h das modifizierte Natriummontmorillonit nach Beispiel 3 dosiert. Nach intensiver Homogenisierung wird die Mischung in der Dekompressionszone entgast, ausgetragen und granuliert.

Daraus hergestellte Prüfkörper besitzen eine Kerbschlagzähigkeit von 10 kJ/m² und einen Elastizitätsmodul von 2250 MPa. Die Prüfung der Flammwidrigkeit nach UL 94 (1,6 mm) ergibt die Einordnung in die Klasse V-0.

### Beispiel 6

In einen Leistritz-Extruder ZSK 27, UD=44 mit Seitenstromdosierung für pulverförmige Medien und einer Dekompressionszone für Vacuumentgasung, Temperaturprofil 20/215/215/215/215/215/215/215/215/215°C, wird eine Mischung eines Polypropylen-Homopolymers (Schmelzindex 8,0 g/10 min bei 230°C/2,16 kg), 20 Masse% Ammoniumpolyphosphat, 5 Masse% Pentaerythrit, 0,15 Masse% 2-tert.Butyl-4,6-diisopropylphenol, 0,10 Masse% Bis-2,2,6,6-tetramethyl-4-piperidylsebazat und 0,3 Masse%, jeweils bezogen auf das Polypropylen-Homopolymer, an Calciumstearat mit 6,8 kg/h dosiert, aufgeschmolzen und homogenisiert. Nachfolgend werden in die Polyolefinschmelze über eine Dosiereinrichtung für pulverförmige Medien in die Zone 4 mit 0,68 kg/h modifizierte anorganische Partikel nach Beispiel 4 dosiert. Nach intensiver Homogenisierung wird die Mischung in der Dekompressionszone zur Entspannung gebracht, entgast, ausgetragen und granuliert.

Daraus hergestellte Prüfkörper besitzen eine Kerbschlagzähigkeit von 8 kJ/m² und einen Elastizitätsmodul von 2450 MPa. Die Prüfung der Flammwidrigkeit nach UL 94 (1,6 mm) ergibt die Einordnung in die Klasse V-0.

### Beispiel 7

### Herstellung der Laminierharzlösung

In einem 150 Liter - Rührreaktor mit Rückflusskühler und Hochgeschwindigkeitsdispergator werden 35 kg einer 30% wässrigen Aldehydlösung aus Formaldehyd/Furfural 9:1, 8 kg Melamin, 2 kg Anilin und 2,5 kg 2-(2-Hydroxyethyl-amino)-4,6-diamino-1,3,5-triazin eingetragen, mit Natronlauge auf pH=7,0 eingestellt und bei 80°C unter Rühren innerhalb 35 min kondensiert. Nach Abkühlung auf Raumtemperatur werden zu der Reaktionsmischung 1,2 kg modifizierte anorganische Partikel nach Beispiel 1 zugesetzt und 45 min bei 45°C gerührt.

Verarbeitung der Aminoplast-Lösuhg mit dispergierten modifizierten anorganischen Partikeln zu Laminaten.

Zur Herstellung der Laminate wird mit der Laminierharzlösung, die 0,2% Citronensäure /Phthalsäure 1 : 1 als Härter, 5 Masse% modifizierte anorganische Partikel und jeweils 1 Masse% Benetzungs- und Trennmittel enthält, ein Dekorpapier (Flächenmasse 80 g/m²) und ein Kraftpapier als Kernpapier (Flächenmasse 180 g/m²) bei 25°C imprägniert. Nach Trocknung im Umluftofen bei 140°C auf eine Flüchte von 7,2% besitzt das Dekorpapier einen Anteil an gefülltem Laminierharz von 58 Masse% und das Kraftpapier einen Anteil an gefülltem Laminierharz von 46 Masse%. Nachfolgend werden zwei Schichten des imprägnierten Dekorpapiers mit einer Lage Kempapier zwischenliegend in einer Laminierpresse mit einem Druck von 90 bar bei 155°C 120 s zusammengepresst.

Zur Prüfung der Zähigkeit wurde die Nachverformbarkeit des resultierenden Laminats untersucht. Bei Biegung des Laminats um einen auf 160°C aufgeheizten 2,5 mm Metalldorn trat keine Rissbildung des Laminats auf.

## Patentansprüche

1. Modifizierte anorganische Partikel mit Schichtstruktur, **dadurch gekennzeichnet, dass** die modifizierten anorganischen Partikel einen mittleren Partikeldurchmesser von 5 nm bis 20000 nm und eine äußere Hülle aus 0,1 bis 20 Masse%, bezogen auf das wasserfreie anorganische Partikel, Aminoplasten besitzen und interlamellar 20 bis 5000 Masse%, bezogen auf das wasserfreie anorganische Partikel, eines Gemischs aus 50 bis 98 Masse% von im wesentlichen mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze und 2 bis 50 Masse% Wasser enthalten.

2. Modifizierte anorganische Partikel nach Anspruch 1, **dadurch gekennzeichnet, dass** die anorganischen Partikel mit Schichtstruktur Silikate, Phosphate, Arsenate, Titanate, Vanadate, Niobate, Molybdate und/oder Manganate sind.

3. Modifizierte anorganische Partikel nach Anspruch 2, **dadurch gekennzeichnet, dass** die anorganischen Partikel mit Schichtstruktur Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Volkonskoit, Magadit, Rectorit, Halloysit, Kenyait, Sauconit, Borfluorphlogopite und/oder synthetische Schichtsilikate sind.

4. Modifizierte anorganische Partikel nach einem der vorhergehenden Ansprüche, **dadurch gekennzeichnet, dass** die Aminoplaste Melaminharze, Harnstoffharze, Cyanamidharze, Dicyandiamidharze, Sulfonamidharze, Guanaminharze und/oder Anilinharze sind.

5. Modifizierte anorganische Partikel nach Anspruch 4, **dadurch gekennzeichnet, dass** die Melaminharze Polykondensate aus Melamin bzw. Melaminderivaten und C₁-C₁₀-Aldehyden mit einem Molverhältnis Melamin bzw. Melaminderivat / C₁-C₁₀-Aldehyden 1 : 1 bis 1 : 6 sowie deren partielle Veretherungsprodukte mit C₁-C₁₀-Alkoholen sind

6. Modifizierte anorganische Partikel nach Anspruch 1, **dadurch gekennzeichnet, dass** die Melaminderivate durch Hydroxy-C₁-C₁₀-alkylgruppen, Hydroxy-C₁-C₄-alkyl-(oxa-C₂-C₄-alkyl)₁₋₅-gruppen und/oder durch Amino-C₁-C₁₂-alkylgruppen substituierte Melamine, Diaminomethyltriazine und/oder Diaminophenyltriazine sind.

7. Modifizierte anorganische Partikel nach Anspruch 1, **dadurch gekennzeichnet, dass** die Harnstoffderivate Thioharnstoff, sowie durch C₁-C₁₀-alkylgruppen, C₆-C₁₄-arylgruppen, Hydroxy-C₁-C₁₀-alkylgruppen, Hydroxy-C₁-C₄-alkyl-(oxa-C₂-C₄-alkyl)₁₋₅-gruppen und/oder durch Amino-C₁-C₁₂-alkylgruppen substituierter Harnstoff bzw. Thioharnstoff sind.

8. Modifizierte anorganische Partikel nach Anspruch 1, 6 und 7, **dadurch gekennzeichnet, dass** die Salze von Melamin, Melaminderivaten, Harnstoff, Harnstoffderivaten, Guanidin, Guanidinderivaten, Cyanamid, Dicyandiamid, Sulfonamiden und/oder Anilin Salze mit anorganischen und/oder organischen Anionen sind.

9. Modifizierte anorganische Partikel nach Anspruch 5, **dadurch gekennzeichnet, dass** die C₁-C₁₀-Aldehyde Formaldehyd, Acetaldehyd, Trimethylolacetaldehyd, Acrolein, Benzaldehyd, Furfurol, Glyoxal, Glutaraldehyd, Phthalaldehyd und/oder Terephthalaldehyd sind.

10. Verfahren zur Herstellung modifizierter anorganischer Partikel mit Schichtstruktur, **dadurch gekennzeichnet, dass** in einem Rührreaktor Suspensionen von anorganischen Partikeln mit Schichtstruktur in Wasser bzw. Mischungen aus 5 bis 99 Gew.% Wasser und 95 bis 1 Masse% C₁-C₈-Alkoholen mit einem Feststoffgehalt von 2 bis 35 Masse% bei 20 bis 100 °C und einer Verweilzeit von 10 bis 180 min mit Lösungen oder Suspensionen von mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert werden, wobei der Masseanteil der mehrfunktionellen C₁-C₃₀ Aminoverbindungen, bezogen auf das wasserfreie anorganische Partikel, 20 bis 5000 Masse% beträgt, nachfolgend zu der Dispersion der beladenen anorganischen Partikel, gegebenenfalls nach partieller Abtrennung der flüssigen Phase, Aminoplastprepolymere vom Typ Melaminharze, Harnstoffharze, Cyanamidharze, Dicyandiamidharze, Sulfonamidharze, Guanaminharze und/oder Anilinharze mit einem Molmassenzahlenmittel von 150 bis 1000 als Lösung in Wasser und/oder in organischen Lösungsmitteln oder Lösungsmittelgemischen mit einem Harzanteil von 30 bis 98 Masse% sowie gegebenenfalls 0,1 bis 2,0 Masse%, bezogen auf die Aminoplastprepolymere, saure Katalysatoren, bei 20 bis 90 °C eingetragen und umgesetzt werden, wobei der Aminoplastanteil in der Dispersion, bezogen auf das wasserfreie anorganische Partikel, 0,1 bis 20 Masse%, der Feststoffgehalt der Dispersion an anorganischen Partikeln 0,5 bis 35 Masse% und die Verweilzeit 10 bis 45 min beträgt, und nachfolgend die modifizierten anorganischen Partikel unter Abtrennung der flüssigen Phase bei 20 bis 180 °C und einer Verweilzeit von 0,1 bis 8 Std. getrocknet werden.

11. Verfahren zur Herstellung modifizierter anorganischer Partikel mit Schichtstruktur, **dadurch gekennzeichnet, dass** in einem Rührreaktor Suspensionen von anorganischen Partikeln mit Schichtstruktur in Wasser bzw. Mischungen aus 5 bis 99 Gew.% Wasser und 95 bis 1 Masse% C₁-C₈-Alkoholen mit einem Feststoffgehalt von 2 bis 35 Masse% bei 20 bis 100 °C und einer Verweilzeit von 10 bis 180 min mit Lösungen oder Suspensionen von mehrfunktionellen C₁-C₃₀ Aminoverbindungen vom Typ Melamin, Melaminderivate, Harnstoff, Harnstoffderivate, Cyanamid, Dicyandiamid, Sulfonamide Guanidin, Guanidinderivate und/oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert werden, wobei der Masseanteil der mehrfunktionellen C₁-C₃₀ Aminoverbindungen, bezogen auf die wasserfreien anorganischen Partikel, 20 bis 5000 Masse% beträgt, nachfolgend zu der Dispersion der beladenen anorganischen Partikel, gegebenenfalls nach partieller Abtrennung der flüssigen Phase, 0,1 bis 10 Masse%, bezogen auf die wasserfreien anorganischen Partikel, C₁-C₁₀-Aldehyde als 5 bis 50% Lösungen in Wasser bzw. Mischungen aus 5 bis 99 Gew.% Wasser und 95 bis 1 Masse% C₁-C₈-Alkoholen, die gegebenenfalls 0,05 bis 1,0 Masse%, bezogen auf die C₁-C₁₀-Aldehyde, saure Katalysatoren enthalten, innerhalb 10 bis 90 min bei 50 bis 90 °C zugesetzt werden, und nachfolgend die modifizierten anorganischen Partikel unter Abtrennung der flüssigen Phase bei 20 bis 180 °C und einer Verweilzeit von 0,1 bis 8 Std. getrocknet werden.

12. Verwendung von modifizierten anorganischen Partikeln mit Schichtstruktur nach Anspruch 1 zum Flammfestmachen von Kunststoffen sowie als Additiv zur Erhöhung der Kratzfestigkeit, UV-Beständigkeit und Verbesserung der Barriereeigenschaften von Kunststoffen und Kunststofflaminaten, sowie als Katalysator bzw. Katalysatorträger.

13. Verwendung nach Anspruch 12, **dadurch gekennzeichnet, dass** die modifizierten anorganischen Partikel in Kombination mit anorganischen und/oder organischen Salzen mit Ammonium-, Alkylammonium-, Arylammonium, Phosphonium-, Alkylphosphonium-, Aryl-phosphonium-, Alkali- und/oder Erdalkali-Kationen und/oder Phosphat-, Phosphit-, Phosphonat-, Silikat und/oder Borat-Anionen und/oder mit mehrwertigen Alkoholen vom Typ Erythrit, Pentaerythrit, Pentit und/oder Hexit eingesetzt werden.

14. Polyolefine, enthaltend 1 bis 60 Masse%, bezogen auf die eingesetzten Polyolefine, modifizierte anorganische Partikel mit Schichtstruktur nach Anspruch 1 sowie gegebenenfalls als weitere Zusatzstoffe anorganische bzw. organischen Salze, Füllstoffe, Verstärkerstoffe, polymere Dispergatoren, Hilfsstoffe und/oder mehrwertige Alkohole, wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 25 Masse% im Polyolefin enthalten sein können,
wobei die Füllstoffe und/oder Verstärkerstoffe anorganische bzw. organische Füllstoffe und/oder Fasern sind, die bis zu 40 Masse% im Polyolefin enthalten sein können,
wobei die polymeren Dispergatoren wasserlösliche, in Wasser dispergierbare und/oder in Wasser emulgierbare Polymere sind, die bis zu 3 Masse% im Polyolefin enthalten sein können,
und wobei die mehrwertigen Alkohole mehrwertige Alkohole vom Typ Erythrit, Pentaerythrit, Pentit und/oder Hexit sind, die bis zu 15 Masse% im Polyolefin enthalten sein können.

15. Duroplastische Kunststoffe, enthaltend 2 bis 80 Masse%, bezogen auf die eingesetzten duroplastischen Kunststoffe, modifizierte anorganische Partikel mit Schichtstruktur nach Anspruch 1 sowie gegebenenfalls als weitere Zusatzstoffe anorganische bzw. organischen Salze, Füllstoffe, Verstärkerstoffe, polymere Dispergatoren, Hilfsstoffe und/oder mehrwertige Alkohole,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 60 Masse% in den duroplastischen Kunststoffen enthalten sein können, wobei die Füllstoffe und/oder Verstärkerstoffe anorganische bzw. organische Füllstoffe und/oder Fasern sind, die bis zu 70 Masse% in den duroplastischen Kunststoffen enthalten sein können,
wobei die polymeren Dispergatoren wasserlösliche, in Wasser dispergierbare und/oder in Wasser emulgierbare Polymere sind, die bis zu 5 Masse% in den duroplastischen Kunststoffen enthalten sein können,
und wobei die mehrwertigen Alkohole mehrwertige Alkohole vom Typ Erythrit, Pentaerythrit, Pentit und/oder Hexit sind, die bis zu 30 Masse% in den duroplastischen Kunststoffen enthalten sein können.

## Claims

1. Modified inorganic particle having a layer structure, **characterized in that** the modified inorganic particles have a mean particle diameter of from 5 nm to 20 000 nm and an outer shell of from 0.1 to 20 % by mass, based on the anhydrous inorganic particle, of aminoplasts and an interlamellar content of from 20 to 5 000 % by mass, based on the anhydrous inorganic particle, of a mixture of from 50 to 98 % by mass of substantially polyfunctional C₁-C₃₀ amino compounds of the type consisting of melamine, melamine derivatives, urea, urea derivatives, guanidine, guanidine derivatives, cyanamide, dicyandiamide, sulfonamide and/or aniline as well as their salts and from 2 to 50 % by mass of water.

2. Modified inorganic particles according to Claim 1, **characterized in that** the inorganic particles having a layer structure are silicates, phosphates, arsenates, titanates, vanadates, niobates, molybdates and/or manganates.

3. Modified inorganic particles according to Claim 2, **characterized in that** the inorganic particles having a layer structure are sheet silicates of the type consisting of montmorillonite, bentonite, kaolinite, muscovite, hectorite, fluorohectorite, kanemite, revdite, grumantite, ilerite, saponite, beidelite, nontronite, stevensite, laponite, taneolite, vermiculite, volkonskoite, magadite, rectorite, halloysite, kenyaite, sauconite, borofluorophlogopite, and/or synthetic sheet silicates.

4. Modified inorganic particles according to any of the preceding Claims, **characterized in that** the aminoplasts are melamine resins, urea resins, cyanamide resins, dicyandiamide resins, sulfonamide resins, guanamine resins, and/or aniline resins.

5. Modified inorganic particles according to Claim 4, **characterized in that** the melamine resins are polycondensates of melamine or melamine derivatives and C₁-C₁₀-aldehydes with a molar melamine or melamine derivative/C₁-C₁₀-aldehyde ratio of from 1:1 to 1:6 and the partial etherification products thereof with C₁-C₁₀-alcohols.

6. Modified inorganic particles according to Claim 1, **characterized in that** the melamine derivatives are melamines, diaminomethyltriazines and/or diaminophenyltriazines substituted by hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups.

7. Modified inorganic particles according to Claim 1, **characterized in that** the urea derivatives are thiourea, and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups.

8. Modified inorganic particles according to Claims 1, 6 and 7, **characterized in that** the salts of melamine, melamine derivatives, urea, urea derivatives, guanidine, guanidine derivatives, cyanamide, dicyandiamide, sulfonamides and/or aniline are salts with inorganic and/or organic anions.

9. Modified inorganic particles according to Claim 5, **characterized in that** the C₁-C₁₀-aldehydes are formaldehyde, acetaldehyde, trimethylolacetaldehyde, acrolein, benzaldehyde, furfurol, glyoxal, glutaraldehyde, phthalaldehyde and/or terephthalaldehyde.

10. Process for the preparation of modified inorganic particles having a layer structure, **characterized in that**, in a stirred reactor, suspensions of inorganic particles having a layer structure in water or mixtures of from 5 to 99 % by weight of water and from 95 to 1 % by mass of C₁-C₈-alcohols, having a solids content of from 2 to 35 % by mass, are homogenized at from 20 to 100 °C and for a residence time of from 10 to 180 min with solutions or suspensions of polyfunctional C₁-C₃₀ amino compounds of the type of melamine, melamine derivatives, urea, urea derivatives, guanidine, guanidine derivatives, cyanamide, dicyandiamide, sulfonamides and/or aniline as well as salts thereof in water or mixtures of from 5 to 99 % by weight of water and from 95 to 1 % by mass of C₁-C₈-alcohols, having a solids content of from 5 to 90 % by mass, the amount by mass of the polyfunctional C₁-C₃₀ amino compounds being from 20 to 5000 % by mass, based on the mass of the anhydrous inorganic particle, subsequently, optionally after the liquid phase has been partially separated off, aminoplast prepolymers of the type of melamine resins, urea resins, cyanamide resins, dicyandiamide resins, sulfonamide resins, guanamine resins and/or aniline resins having a number average molar mass of from 150 to 1000, as a solution in water and/or in organic solvents or solvent mixtures having a resin content of from 30 to 98 % by mass, as well as optionally from 0.1 to 2.0 % by mass, based on the mass of the aminoplast prepolymers, acidic catalysts are added to the dispersion of the loaded inorganic particles and reacted at from 20 to 90 °C, the aminoplast content of the dispersion being from 0.1 to 20 % by mass, based on the anhydrous inorganic particles, the solids content of the dispersion with regard to inorganic particles being from 0.5 to 35 % by mass and the residence time being from 10 to 45 min, and thereafter the modified inorganic particles are dried with removal of the liquid phase at from 20 to 180 °C and for a residence time of from 0.1 to 8 hours.

11. Process for the preparation of modified inorganic particles having a layer structure, **characterized in that**, in a stirred reactor, suspensions of inorganic particles having a layer structure in water or mixtures of from 5 to 99% by weight of water and from 95 to 1% by mass of C₁-C₈-alcohols, having a solids content of from 2 to 35 % by mass, are homogenized at from 20 to 100 °C and for a residence time of from 10 to 180 min with solutions or suspensions of polyfunctional C₁-C₃₀ amino compounds of the type of melamine, melamine derivatives, urea, urea derivatives, cyanamide, dicyandiamide, sulfonamides, guanidine, guanidine derivatives and/or aniline as well as salts thereof in water or mixtures of from 5 to 99 % by weight of water and from 95 to 1 % by mass of C₁-C₈-alcohols, having a solids content of from 5 to 90 % by mass, the amount by mass of the polyfunctional C₁-C₃₀ amino compounds being from 20 to 5000 % by mass, based on the mass of the anhydrous inorganic particles, subsequently, optionally after the liquid phase has been partially separated off, C₁-C₁₀ aldehydes in form of 5 to 50 % solutions in water or mixtures of from 5 to 99 % by weight of water and from 95 to 1 % by mass of C₁-C₈-alcohols, optionally containing 0.05 to 1.0 % by mass, based on the C₁-C₁₀ aldehydes, of acidic catalysts, are added to the dispersion of the loaded inorganic particles within 10 to 90 min at 50 to 90 °C, and thereafter the modified inorganic particles are dried with removal of the liquid phase at from 20 to 180 °C and for a residence time of from 0.1 to 8 hours.

12. Use of modified inorganic particles having a layer structure according to Claim 1 for flameproofing plastics, and as additive for increasing the scratch resistance, UV stability and improving the barrier properties of plastics and plastics laminates, and as a catalyst or catalyst support.

13. Use according to Claim 12, **characterized in that** the modified inorganic particles are used in combination with inorganic and/or organic salts having ammonium, alkylammonium, arylammonium, phosphonium, alkylphosphonium, arylphosphonium, alkali metal and/or alkaline earth metal cations and/or phosphate, phosphite, phosphonate, silicate and/or borate anions, and/or with polyhydric alcohols of the type of erythritol, pentaerythritol, pentitol and/or hexitol.

14. Polyolefins comprising from 1 to 60 % by mass, based on the polyolefins used, of modified inorganic particles having a layer structure according to Claim 1 and optionally, as further additives, inorganic or organic salts, fillers, reinforcing materials, polymeric dispersants, assistants and/or polyhydric alcohols, the inorganic or organic salts being salts having ammonium, alkylammonium, phosphonium, alkylphosphonium, arylphosphonium, alkali metal and/or alkaline earth metal cations and/or salts having phosphite, phosphate, phosphonate, silicate and/or borate anions, which may be contained in an amount of up to 25 % by mass in the polyolefin,
the fillers and/or reinforcing materials being inorganic or organic fillers and/or fibers which may be contained in an amount of up to 40 % by mass in the polyolefin,
the polymeric dispersants being water-soluble, water-dispersible and/or water-emulsifiable polymers, which may be present in an amount of up to 3 % by mass in the polyolefin,
and the polyhydric alcohols being polyhydric alcohols of the type consisting of erythritol, pentaerythritol, pentitol and/or hexitol, which may be contained in an amount of up to 15% by mass in the polyolefin.

15. Thermosetting plastics comprising from 2 to 80% by mass, based on the thermosetting plastics used, of modified inorganic particles having a layer structure according to Claim 1 and optionally, as further additives, inorganic or organic salts, fillers, reinforcing materials, polymeric dispersants, assistants and/or polyhydric alcohols,
the inorganic or organic salts being salts having ammonium, alkylammonium, phosphonium, alkylphosphonium, arylphosphonium, alkali metal and/or alkaline earth metal cations and/or salts having phosphite, phosphate, phosphonate, silicate and/or borate anions, which may be contained in an amount of up to 60 % by mass in the thermosetting plastics, the fillers and/or reinforcing materials being inorganic or organic fillers and/or fibers which may be contained in an amount of up to 70% by mass in the thermosetting plastics,
the fillers and/or reinforcing materials being inorganic or organic fillers and/or fibers which may be contained in an amount of up to 70 % by mass in the thermosetting plastics,
the polymeric dispersants being water-soluble, water-dispersible and/or water-emulsifiable polymers, which may be present in an amount of up to 5 % by mass in the thermosetting plastics,
and the polyhydric alcohols being polyhydric alcohols of the type consisting of erythritol, pentaerythritol, pentitol and/or hexitol, which may be contained in an amount of up to 30 % by mass in the thermosetting plastics.

## Revendications

1. Particules inorganiques modifiées, à structure lamellaire, **caractérisées en ce que** les particules inorganiques modifiées a un diamètre moyen de particule de 5 nm à 20 000 nm et une enveloppe extérieure de 0,1 à 20 % en masse, par rapport à la particule inorganique anhydre, des aminoplastes, et une teneur interlamellaire de 20 à 5 000 % en masse, par rapport à la particule inorganique anhydre, en un mélange de 50 à 98 % en masse de composés aminés essentiellement polyfonctionnels en C₁-C₃₀ de type mélamine, dérivés de mélamine, urée, dérivés d'urée, guanidine, dérivés de guanidine, cyanamide, dicyanamide, sulfonamide et/ou aniline ainsi que leurs sels et de 2 à 50 % en masse d'eau.

2. Particules inorganiques modifiées selon la revendication 1, **caractérisées en ce que** les particules inorganiques à structure lamellaire sont des silicates, des phosphates, des arséniates, des titanates, des vanadates, des niobates, des molybdates et/ou des manganates.

3. Particules inorganiques modifiées selon la revendication 2, **caractérisées en ce que** les particules inorganiques à structure lamellaire sont des silicates lamellaires du type montmorillonite, bentonite, kaolinite, muscovite, hectorite, fluorohectorite, kanémite, revdite, grumantite, ilérite, saponite, beidellite, nontronite, stévensite, laponite, tanéolite, vermiculite, volkonskoïte, magadite, rectorite, halloysite, kenyaïte, sauconite, borofluorophlogopite et/ou des silicates lamellaires synthétique.

4. Particules inorganiques modifiées selon l'une quelconque des revendications précédentes, **caractérisées en ce que** les aminoplastes sont des résines mélamine, des résines urée, des résines cyanamide, des résines dicyanodiamide, des résines sulfonamide, des résines guanamine, et/ou des résines aniline.

5. Particules inorganiques modifiées selon la revendication 4, **caractérisées en ce que** les résines mélamine sont des produits de polycondensation de mélamine ou dérivés de mélamine et d'aldéhydes en C₁-C₁₀ ayant un rapport molaire mélamine ou dérivé de mélamine / aldéhydes en C₁-C₁₀ de 1:1 à 1:6, ainsi que leurs produits d'éthérification partielle par des alcools en C₁-C₁₀.

6. Particules inorganiques modifiées selon la revendication 1, **caractérisées en ce que** les dérivés de mélamine sont des mélamines, des diaminométhyltriazines et/ou des diaminophényltriazines, substituées par des groupes hydroxyalkyle en C₁-C₁₀, des groupes hydroxyalkyle(C₁-C₄)[oxa-alkyle(C₂-C₄)]₁₋₅ et/ou par des groupes aminoalkyle(C₁-C₁₂).

7. Particules inorganiques modifiées selon la revendication 1, **caractérisées en ce que** les dérivés d'urée sont la thio-urée ainsi qu'une urée ou thio-urée substituée par des groupes alkyle en C₁-C₁₀, des groupes aryle en C₆-C₁₄, des groupes hydroxyalkyle(C₁-C₁₀), des groupes hydroxyalkyle(C₁-C₄)[oxa-alkyle(C₂-C₄)]₁₋₅ et/ou par des groupes aminoalkyle(C₁-C₁₂).

8. Particules inorganiques modifiées selon les revendications 1, 6 et 7, **caractérisées en ce que** les sels de mélamine, de dérivés de mélamine, d'urée, de dérivés d'urée, de guanidine, de dérivés de guanidine, de cyanamide, de dicyanodiamide, de sulfonamides et/ou d'aniline sont des sels avec des anions inorganiques et/ou organiques.

9. Particules inorganiques modifiées selon la revendication 5, **caractérisées en ce que** les aldéhydes en C₁-C₁₀ sont le formaldéhyde, l'acétaldéhyde, le triméthylolacétaldéhyde, l'acroléine, le benzaldéhyde, le furfurol, le glyoxal, le glutaraldéhyde, l'aldéhyde phtalique et/ou l'aldéhyde téréphtalique.

10. Procédé pour la préparation de particules inorganiques modifiées, à structure lamellaire, **caractérisé en ce qu'**on homogénéise, dans un réacteur à agitation, des suspensions des particules inorganiques à structure lamellaire dans l'eau ou des mélanges de 5 à 99 % en poids d'eau et de 95 à 1 % en masse d'alcools en C₁-C₈, ayant une teneur en matières solides de 2 à 35 % en masse, à une température de 20 à 100 °C et pendant un temps de séjour de 10 à 180 minutes avec des solutions ou suspensions de composés aminés polyfonctionnels en C₁-C₃₀ du type mélamine, dérivés de mélamine, urée, dérivés d'urée, guanidine, dérivés de guanidine, cyanamide, dicyanodiamide, sulfonamides et/ou aniline ainsi que de leurs sels dans l'eau ou des mélanges de 5 à 99 % en poids d'eau et de 95 à 1 % en masse d'alcools en C₁-C₈, ayant une teneur en matières solides de 5 à 90 % en masse, la proportion en masse des composés aminés polyfonctionnels en C₁-C₃₀, par rapport à la particule inorganique anhydre, étant de 20 à 5000 % en masse, subséquent on ajoute à la dispersion des particules inorganiques chargées, éventuellement après une séparation partielle de la phase liquide, des prépolymères aminoplaste du type résines mélamine, résines urée, résines cyanamide, résines dicyanodiamide, résines sulfonamide, résines guanamine, et/ou résines aniline avec un poids moléculaire moyen en nombre de 150 à 1000 comme solution dans l'eau ou des solvants organique ou des mélanges des solvants avec une proportion de la résine de 30 à 98 % en masse ainsi que éventuellement de 0,1 à 2,0 % en masse, par rapport aux prépolymères aminoplaste, de catalyseurs acides, à une température de 20 à 90 °C et on fait réagir le mélange, la proportion des aminoplastes dans la dispersion, par rapport à la particule inorganique anhydre, étant de 0,1 à 20 % en masse, la teneur en matières solides de la dispersion en relation aux particules inorganiques étant de 0,5 à 35 % en masse et le temps de séjour étant de 10 à 45 minutes, et les particules inorganiques modifiées sont ensuite séchées par séparation de la phase liquide à 20-180 °C et pendant un temps de séjour de 0,1 à 8 heures.

11. Procédé pour la préparation de particules inorganiques modifiées, à structure lamellaire, **caractérisé en ce qu'**on homogénéise, dans un réacteur à agitation, des suspensions des particules inorganiques à structure lamellaire dans l'eau ou des mélanges de 5 à 99 % en poids d'eau et de 95 à 1 % en masse d'alcools en C₁-C₈, ayant une teneur en matières solides de 2 à 35 % en masse, à une température de 20 à 100 °C et pendant un temps de séjour de 10 à 180 minutes avec des solutions ou suspensions de composés aminés polyfonctionnels en C₁-C₃₀ du type mélamine, dérivés de mélamine, urée, dérivés d'urée, guanidine, dérivés de guanidine, cyanamide, dicyanodiamide, sulfonamides et/ou aniline ainsi que de leurs sels dans l'eau ou des mélanges de 5 à 99 % en poids d'eau et de 95 à 1 % en masse d'alcools en C₁-C₈, ayant une teneur en matières solides de 5 à 90 % en masse, la proportion en masse des composés aminés polyfonctionnels en C₁-C₃₀, par rapport aux particules inorganiques anhydres, étant de 20 à 5000 % en masse, subséquent on ajoute à la dispersion des particules inorganiques chargées, éventuellement après une séparation partielle de la phase liquide, de 0,1 à 10 % en masse, par rapport aux particules inorganiques anhydres, des aldéhydes en C₁-C₁₀ comme solutions de 5 à 50 % en masse dans l'eau ou des mélanges de 5 à 99 % en poids d'eau et de 95 à 1 % en masse d'alcools en C₁-C₈, qui éventuellement comprennent de 0,05 à 1,0 % en masse, par rapport aux aldéhydes en C₁-C₁₀, de catalyseurs acides, pendant un temps de 10 à 90 minutes à une température de 50 à 90 °C, et les particules inorganiques modifiées sont ensuite séchées par séparation de la phase liquide à 20-180 °C et pendant un temps de séjour de 0,1 à 8 heures.

12. Utilisation de particules inorganiques modifiées, à structure lamellaire, selon la revendication 1, pour l'ignifugation de matières plastiques ainsi que comme additif pour augmenter la résistance aux rayures, la résistance aux UV et améliorer les propriétés barrière de matières plastiques et de stratifiés de matières plastiques, ainsi qu'en tant que catalyseurs ou supports de catalyseurs.

13. Utilisation selon la revendication 12, **caractérisée en ce que** les particules inorganiques modifiées sont utilisées en combinaison avec des sels inorganique et/ou organiques avec des cations ammonium, alkylammonium, arylammonium, phosphonium, alkylphosphonium, arylphosphonium, alcalins et/ou alcalino-terreux et/ou des anions phosphate, phosphite, phosphonate, silicate et/ou borate et/ou avec des alcools polyhydriques du type érythritol, pentaérythritol, pentitol et/ou hexitol.

14. Polyoléfines, contenant de 1 à 60 % en masse, par rapport aux polyoléfines utilisées, de particules inorganiques modifiées, à structure lamellaire, selon la revendication 1, ainsi qu'éventuellement en tant qu'autres additifs des sels inorganiques ou organiques, des charges, des renforts, des dispersants polymères, des adjuvants et/ou des alcools polyhydriques, les sels inorganiques ou organiques étant des sels avec des cations ammonium, alkylammonium, phosphonium, alkylphosphonium, arylphosphonium, alcalins et/ou alcalino-terreux et/ou des sels avec des anions phosphite, phosphate, phosphonate, silicate et/ou borate, qui peuvent être contenus à raison de jusqu'à 25 % en masse dans la polyoléfine,
les charges et/ou les renforts étant des charges et/ou des fibres inorganiques ou organiques, qui peuvent être contenues à raison de jusqu'à 40 % en masse dans la polyoléfine,
les dispersants polymères étant des polymères hydrosolubles, dispersibles dans l'eau et/ou émulsifiables dans l'eau, qui peuvent être contenus à raison de jusqu'à 3 % en masse dans les polyoléfines,
et les alcools polyhydriques étant des alcools polyhydriques du type érythritol, pentaérythritol, pentitol et/ou hexitol, qui peuvent être contenus à raison de jusqu'à 15 % en masse dans la polyoléfine.

15. Matières plastiques thermodurcissables contenant de 2 à 80 % en masse, par rapport aux matières plastiques thermodurcissables utilisées, de particules inorganiques modifiées, à structure lamellaire, selon la revendication 1 ainsi qu'éventuellement, comme autres additifs, des sels inorganiques ou organiques, des charges, des renforts, des dispersants polymères, des adjuvants et/ou des alcools polyhydriques, les sels inorganiques ou organiques étant des sels avec des cations ammonium, alkylammonium, phosphonium, alkylphosphonium, arylphosphonium, alcalins et/ou alcalino-terreux et/ou des sels avec des anions phosphite, phosphate, phosphonate, silicate et/ou borate, qui peuvent être contenus à raison de jusqu'à 60 % en masse dans les matières plastiques thermodurcissables,
les charges et/ou les renforts étant des charges et/ou des fibres inorganiques ou organiques, qui peuvent être contenues à raison de jusqu'à 70 % en masse dans les matières plastiques thermodurcissables,
les dispersants polymères étant des polymères hydrosolubles, dispersibles dans l'eau et/ou émulsifiables dans l'eau, qui peuvent être contenus à raison de jusqu'à 5 % en masse dans les matières plastiques thermodurcissables,
et les alcools polyhydriques étant des alcools polyhydriques du type érythritol, pentaérythritol, pentitol et/ou hexitol, qui peuvent être contenus à raison de jusqu'à 30 % en masse dans les matières plastiques thermodurcissables.
